# EUROPÄISCHE PATENTANMELDUNG

(11) **EP 3 020 995 A1**
(43) Veröffentlichungstag der Anmeldung: **18.05.2016**
(21) Anmeldenummer: 15192859.5
(22) Anmeldetag: 04.11.2015
(51) Int. Cl.: F16D 25/08, F16D 29/00, F16D 48/02, F16D 125/10

(54) **HYDRAULISCHER HILFSAKTUATOR SOWIE FAHRZEUG MIT EINEM HYDRAULISCHEN HILFSAKTOR**

(30) Priorität: 10.11.2014 CN 201410645346
(71) Anmelder: Schaeffler Technologies AG & Co. KG, 91074 Herzogenaurach (DE)
(72) Erfinder: Huang, Chao, 201804 Shanghai (CN); Li, Zhe, Shanghai, (CN)

(57) **Zusammenfassung**

Hydraulischer Hilfsaktuator (50) und diesen umfassendes Fahrzeug, wobei der hydraulische Hilfsaktuator (50) an einer Seite mit einer Pedalbaugruppe eines Fahrzeugs verbunden ist und an der anderen Seite mit einer Kupplungsbaugruppe eines Fahrzeugs verbunden ist und er umfasst: einen Elektromotor (10), eine Kugelgewindespindel (14), eine Hydraulikzylinderbaugruppe, und er mit der Kugelgewindespindel (14) verbunden ist, um von der Kugelgewindespindel (14) angetrieben zu werden. Die Hydraulikzylinderbaugruppe umfasst: einen Zylindergehäusekörper (2); im Zylindergehäusekörper (2) der Reihe nach angeordnet einen zweiten Kolben (7), einen ersten Kolben (3) und einen dritten Kolben (24b); eine erste Vorspannfeder (9), die den zweiten Kolben (7) relativ zum ersten Kolben (3) vorspannt; eine zweite Vorspannfeder (24c), die den dritten Kolben (24b) relativ zum ersten Kolben (3) vorspannt; wobei im Zylindergehäusekörper (2) ein Loch (5) angeordnet ist, das eine Fluidverbindung der Hydraulikzylinderbaugruppe mit der Pedalbaugruppe bewirkt, das Loch (5) in axialer Richtung des Zylindergehäusekörpers (2) sich zwischen dem zweiten Dichtungsring (8) des zweiten Kolbens (7) und dem dritten Dichtungsring (24d) des dritten Kolbens (24b) befindet und der erste Kolben (3) sich durch das Loch (5) bewegen kann.

## Beschreibung

Diese Erfindung betrifft einen hydraulischen Hilfsaktuator sowie ein diesen umfassendes Fahrzeug, mit einem hydraulischen Hilfsaktor.

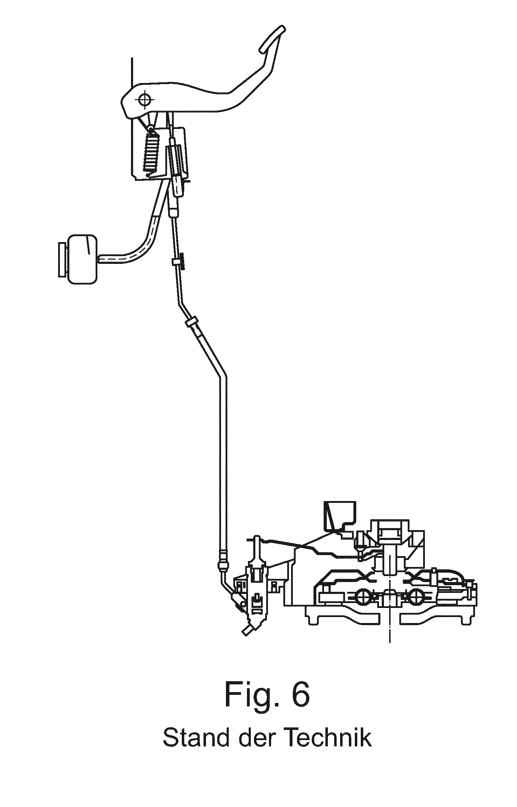

Kupplungen auf dem Gebiet von Fahrzeugen verwenden im Allgemeinen eine hydraulische Hilfsbetätigung. Fig. 6 zeigt schematisch ein herkömmliches hydraulisches Kupplungsausrücksystem für ein Handschaltgetriebe, das auf dem chinesischen und europäischen Markt häufig anzutreffen ist, wobei für die Kupplung eine Membranfeder verwendet wird. Dieses hydraulische Kupplungsausrücksystem umfasst hauptsächlich einen Geberzylinder, einen Nehmerzylinder und eine Hochdruckleitung, welche den Geberzylinder und Nehmerzylinder miteinander verbindet. Wenn das Kupplungspedal oben in Fig. 6 betätigt wird, treibt der Kolben im Geberzylinder die Kupplungsflüssigkeit im System an und überträgt den Druck über die Hochdruckleitung an den Nehmerzylinder. Anschließend treibt der Kolben im Nehmerzylinder über die Kolbenstange die Schaltgabel an. Zuletzt wird die Kupplung in dem glockenförmigen Gehäuse in Fig. 6 unten ausgerückt. In einem weiteren Schritt, wenn das Kupplungspedal freigegeben wird und zurückkehrt, sinkt der Druck im System, und schließlich wird die Kupplung wieder geschlossen.

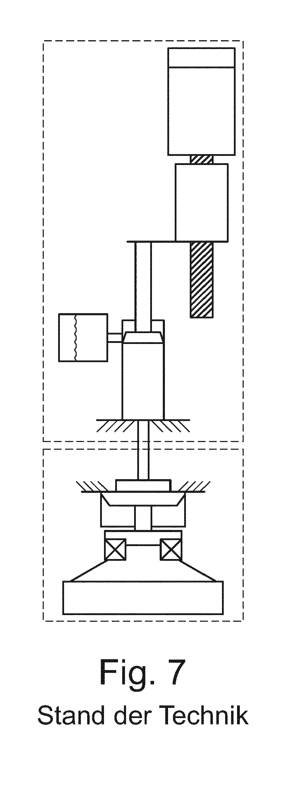

Fig. 7 zeigt ein Blockschaubild eines auf dem Markt häufig vorkommenden weiteren Kupplungsausrücksystems, bei dem es sich um einen rein elektrischen Aktuator handelt. Dieser Aktuator wird von dem Elektromotor oben in Fig. 7 angetrieben und rückt über die Schaltgabel die Kupplung unten in Fig. 7 aus. Außerdem gibt es noch einen hydrostatischen Aktuator.

Die Kupplungsausrücksysteme nach dem Stand der Technik weisen jedoch Mängel auf.

Zum Beispiel gilt für hydraulische Kupplungsausrücksysteme, da das Kupplungspedal vom Fuß des Fahrers betätigt werden muss, dass diese Systeme keine automatische Betätigung und dadurch eine Verringerung der Belastung des Fahrers realisieren können. Vor allem in Situationen mit Verkehrsstaus oder Ampelsteuerung ist diese Belastung wegen des häufigen Stop-and-Go des Fahrzeugs besonders deutlich.

Aufgrund des Verschleißes der Kupplungsscheiben erhöht sich die Ausrückkraft. Während des Ausrückens der Kupplung vergrößert eine relativ hohe Ausrückkraft die Belastungen für den Fuß des Fahrers. Für den Fahrer ist dies unkomfortabel.

Aufgrund der Verwendung einer Membranfeder sinkt nach dem Ausrücken der Kupplung die Kurve der Ausrückkraft der Kupplung schnell ab. Ein relativ starker Rückgang erzeugt ein Gefühl, als würde das Pedal ins Leere getreten, was für den Fahrer ebenfalls unkomfortabel ist.

Für rein elektrische Kupplungsaktuatoren gilt, dass sie eine automatische Kupplungsbetätigung bereitstellen, jedoch dem Fahrer nicht ein Führen des Fahrzeugs in der herkömmlichen Weise bieten können, nämlich die Option, die Kupplung mit dem Fuß präzise auszurücken. Besonders auf dem europäischen Markt ist diese Nachfrage sehr hoch.

Wenn des Weiteren im schlimmsten Fall der Elektromotor ausfällt, kann die Kupplung nicht mehr ausrücken. Deshalb ist die Stufe der Funktionssicherheit sehr niedrig.

Die Aufgabe dieser Erfindung besteht darin, einen hydraulischen Hilfsaktuator bereitzustellen, wobei dieser hydraulische Hilfsaktuator die oben angeführten Mängel nach dem Stand der Technik überwinden kann.

Diese Erfindung stellt einen hydraulischen Hilfsaktuator bereit, wobei der hydraulische Hilfsaktuator an einer Seite mit einer Pedalbaugruppe eines Fahrzeugs verbunden ist, an der anderen Seite mit einer Kupplungsbaugruppe eines Fahrzeugs verbunden ist und dazu dient zu bewirken, dass die Kupplung in der Kupplungsbaugruppe schließt oder ausrückt, und der hydraulische Hilfsaktuator umfasst: einen Elektromotor, wobei der Elektromotor eine Drehbewegung erzeugt; eine Kugelgewindespindel, wobei die Kugelgewindespindel mit dem Elektromotor verbunden ist, um die Drehbewegung des Elektromotors in eine Linearbewegung umzuwandeln; eine Hydraulikzylinderbaugruppe, wobei die Hydraulikzylinderbaugruppe an einem Ende mit der Kugelgewindespindel verbunden ist, um von der Kugelgewindespindel angetrieben zu werden, und am anderen Ende mit der Kupplungsbaugruppe verbunden ist; eine Steuereinheit für ein Steuern des Betriebs des Elektromotors; dadurch gekennzeichnet, dass die Hydraulikzylinderbaugruppe umfasst: einen Zylindergehäusekörper; der Reihe nach im Zylindergehäusekörper angeordnet einen zweiten Kolben, einen ersten Kolben und einen dritten Kolben, wobei der erste Kolben einen ersten Dichtungsring an seinem äußeren Umfang aufweist, der zweite Kolben einen zweiten Dichtungsring an seinem äußeren Umfang und einen vierten Dichtungsring an seinem inneren Umfang aufweist, der dritte Kolben einen dritten Dichtungsring an seinem äußeren Umfang aufweist und der dritte Kolben mit der Kupplungsbaugruppe verbunden ist; eine erste Vorspannfeder, wobei die erste Vorspannfeder den zweiten Kolben relativ zum ersten Kolben vorspannt; eine zweite Vorspannfeder, wobei die zweite Vorspannfeder den dritten Kolben relativ zum ersten Kolben vorspannt; wobei im Zylindergehäusekörper eine Öffnung angeordnet ist, und die Öffnung eine Fluidverbindung der Hydraulikzylinderbaugruppe mit der Pedalbaugruppe bewirkt, und sich in axialer Richtung des Zylindergehäusekörpers zwischen dem zweiten Dichtungsring des zweiten Kolbens und dem dritten Dichtungsring des dritten Kolbens befindet und der erste Kolben sich durch die Öffnung bewegen kann.

Dadurch bewirkt diese Erfindung, dass die elektrische Kupplungsbetätigung und die herkömmliche hydraulische Betätigung gleichzeitig auf ein Handschaltgetriebe angewendet werden können, ohne dass es erforderlich ist, ein herkömmliches hydraulisches Kupplungsausrücksystem zu verändern. Herkömmliche hydraulische Kupplungsausrücksysteme haben in Europa, China und weiteren Gebieten einen riesigen Markt. Deshalb kann diese Erfindung einen enormen ökonomischen Nutzen erzeugen. Diese Erfindung stellt drei grundlegende Betriebsmodi bereit. Erstens stellt diese Erfindung eine elektrische Kupplungsbetätigung bereit, wobei es nicht erforderlich ist, das Kupplungspedal zu bewegen, das heißt, dass sie einen vollautomatischen Kupplungsbetätigungsmodus bereitstellt. Eine elektrische Unterstützung des Stop-and-Go-Modus oder die Funktion des direkten automatisierten mechanischen Schaltens können in sehr einfacher Weise realisiert werden. Zweitens stellt diese Erfindung eine elektrische Kupplungsbetätigung auf der Grundlage des Bewegungsverhaltens des Kupplungspedals bereit, das heißt, dass sie einen halbautomatischen Kupplungsbetätigungsmodus bereitstellt. Durch einen Kupplungssimulator wird die Pedalkraft der Kupplung verringert und ein optimiertes Betätigungsverhalten bereitgestellt. Dies alles erhöht den Komfort während des Ausrückens der Kupplung. Drittens stellt diese Erfindung einen Modus für den Antrieb von Fahrzeugen in der herkömmlichen Weise bereit, das heißt, sie stellt einen Modus des Betätigens der Kupplung durch eine Person bereit, bei dem durch ein Niederdrücken des Kupplungspedals die Kupplung ausrückt. Dieser Modus des Betätigens der Kupplung durch eine Person kann als Reserveprogramm für den schlimmsten Fall des Versagens des Elektromotors dienen. Er kann natürlich auch als eine Option für einen Fahrer dienen, der dem manuellen Fahrverhalten anhängt.

Vorzugsweise umfasst die Hydraulikzylinderbaugruppe einen Stützring, wobei der Stützring relativ zum ersten Kolben befestigt ist und der zweite Kolben sich an dem Stützring bewegen kann.

Vorzugsweise umfasst der Stützring einen Teil mit relativ kleinem Durchmesser und einen Teil mit relativ großem Durchmesser, ist der Teil mit relativ kleinem Durchmesser mit dem ersten Kolben integriert gebildet und kann sich der zweite Kolben an dem Teil mit relativ kleinem Durchmesser bewegen, ist der Teil mit dem relativ großen Durchmesser vom ersten Kolben entfernt und ist die zweite Vorspannfeder zwischen dem Teil mit relativ großem Durchmesser und dem Kolben angeschlossen.

Vorzugsweise umfasst die Hydraulikzylinderbaugruppe außerdem ein Untersetzungsgetriebe, ist das Untersetzungsgetriebe zwischen dem Elektromotor und der Kugelgewindespindel angeschlossen.

Vorzugsweise handelt es sich bei dem Untersetzungsgetriebe um ein Planetengetriebe, ist das Sonnenrad des Planetengetriebes mit dem Rotorträger des Rotors des Elektromotors fest verbunden.

Vorzugsweise ist ein Zahnkranz des Planetengetriebes fest mit dem Elektromotorgehäusekörper des Elektromotors verbunden.

Vorzugsweise ist ein Planetenträger des Planetengetriebes mit der Mutter der Kugelgewindespindel fest verbunden.

Vorzugsweise ist in axialer Richtung des Zylindergehäusekörpers der Abstand zwischen dem ersten Dichtungsring und dem zweiten Dichtungsring größer als der Bewegungshub des ersten Kolbens im Ausrückvorgang der Kupplung.

Vorzugsweise sind an der Pedalbaugruppe ein Pedal, ein Geberzylinder sowie ein Hubsensor angeordnet. Ist das Pedal mit dem Kolben im Geberzylinder verbunden, ermittelt der Hubsensor den Hub des Kolbens im Geberzylinder oder des Pedals und stellt die ermittelten Informationen der Steuereinheit bereit.

Diese Erfindung stellt außerdem ein Fahrzeug bereit, wobei das Fahrzeug ein Handschaltgetriebe und eine Kupplung umfasst, die Kupplung zwischen der Kraftquelle des Fahrzeugs und dem Handschaltgetriebe angeordnet ist, wobei das Fahrzeug außerdem einen hydraulischen Hilfsaktuator umfasst.

Diese und sonstige Aufgaben sowie die Vorteile dieser Erfindung werden in Verbindung mit den Zeichnungen in der nachstehenden Darstellung noch vollständiger veranschaulicht, wobei in allen Zeichnungen identische Bezugszeichen für identische oder ähnliche Teile stehen und es sich um folgende Zeichnungen handelt:
Fig. 1 zeigt eine Anordnungszeichnung eines hydraulischen Hilfsaktuators nach dieser Erfindung,
Fig. 2 zeigt einen Detailaufbau eines hydraulischen Hilfsaktuators dieser Erfindung,
Fig. 3 zeigt einen manuellen Betätigungsmodus eines hydraulischen Hilfsaktuators dieser Erfindung,
Fig. 4 zeigt einen vollautomatischen Betätigungsmodus eines hydraulischen Hilfsaktuators dieser Erfindung,
Fig. 5 zeigt einen halbautomatischen Betätigungsmodus eines hydraulischen Hilfsaktuators dieser Erfindung,
Fig. 6 zeigt schematisch ein hydraulisches Kupplungsausrücksystem nach dem Stand der Technik und
Fig. 7 zeigt ein Blockschaubild eines rein elektrischen Aktuators nach dem Stand der Technik.

Nachstehend werden mit Bezug auf die Zeichnungen Ausführungsbeispiele nach dieser Erfindung detailliert beschrieben. In der Beschreibung der Zeichnungen werden identische oder entsprechende Teile durch identische Zahlen oder Zeichen dargestellt und wiederholte Beschreibungen weggelassen. In dieser Beschreibung für die Darstellung von Richtungen verwendete Termini wie "vorn" und "hinten" bilden keine Einschränkung dieser Erfindung.

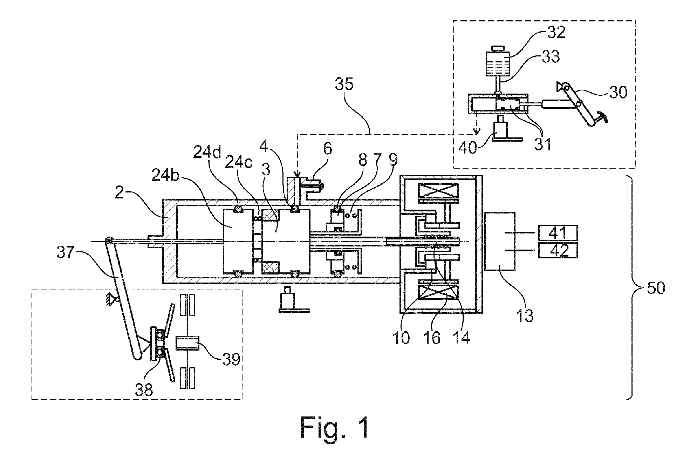

Fig. 1 zeigt eine Anordnungszeichnung eines hydraulischen Hilfsaktuators nach dieser Erfindung. Der hydraulische Hilfsaktuator 50 dieser Erfindung kann für ein Ausrücken von Kupplungen auf dem Gebiet von Fahrzeugen verwendet werden, kann jedoch auch für ein Betätigen von Bremsenarbeitszylindern verwendet werden. Vorzugsweise wird nachfolgend der Fall der möglichen Verwendung des hydraulischen Hilfsaktuators 50 für eine Kupplung beschrieben.

Der hydraulische Hilfsaktuator 50 wird in der Regel außerhalb des Fahrzeuggetriebes angebracht. Wie in Fig. 1 dargestellt, verfügt das Fahrzeug über einen hydraulischen Hilfsaktuator 50, eine Kupplungsbaugruppe und eine Pedalbaugruppe. Die Kupplungsbaugruppe umfasst eine Schaltgabel 37, ein Ausrücklager 38 und eine Kupplung 39, wobei das Ausrücklager 38 unter der Wirkung der Schaltgabel 37 die Kupplung 39 ausrücken kann. Die Pedalbaugruppe dient dem Betätigen der Kupplungsbaugruppe und umfasst ein Kupplungspedal 30, einen Geberzylinder 31, einen Flüssigkeitsspeicher 32, ein Führungsrohr 33 und einen Hubsensor 40. Der Geberzylinder 31 ist über das Führungsrohr 33 mit dem Flüssigkeitsspeicher 32 verbunden, wodurch die Flüssigkeit im Flüssigkeitsspeicher 32 in den Geberzylinder 31 gelangen oder aus dem Geberzylinder 31 austreten kann. Der Hubsensor 40 ist am Geberzylinder 31 oder am Kupplungspedal 30 angebracht und dient einem Ermitteln des Hubs des Kolbens im Geberzylinder 31 oder des Hubs des Kupplungspedals 30. Der hydraulische Hilfsaktuator 50 kann die Schaltgabel 37 anschieben und dadurch ein Bewegen des Ausrücklagers 38 bewirken und schließlich die Kupplung 39 ausrücken.

Der hydraulische Hilfsaktuator 50 umfasst einen Elektromotor 10, eine Kugelgewindespindel 14, eine Leistungselektronik- und Steuereinheit 13 und eine Hydraulikzylinderbaugruppe. Der Antrieb des Elektromotors 10 geht der Reihe nach durch die Kugelgewindespindel 14 und die Hydraulikzylinderbaugruppe und erreicht schließlich die Kupplungsbaugruppe. Der hydraulische Hilfsaktuator 50 verwendet die Kugelgewindespindel 14 für ein Umwandeln der Drehbewegung des Elektromotors 10 in eine lineare Bewegung, wodurch die Hydraulikzylinderbaugruppe angetrieben wird, um ein Ausrücken der Kupplung 39 zu bewirken. Diese Hydraulikzylinderbaugruppe umfasst einen Zylindergehäusekörper 2, drei Kolben, nämlich einen ersten Kolben 3, einen zweiten Kolben 7 und einen dritten Kolben 24b, eine zum Abdichten der Kolben dienende Vielzahl von Dichtungsringen, zum Beispiel einen ersten Dichtungsring 4, einen zweiten Dichtungsring 8, einen dritten Dichtungsring 24d und einen vierten Dichtungsring 19, sowie eine Vielzahl von Vorspannfedern, zum Beispiel eine erste Vorspannfeder 9 und eine zweite Vorspannfeder 24c. Ein Aspekt besteht darin, dass diese Hydraulikzylinderbaugruppe vom Elektromotor 10 oder vom Kupplungspedal 30 angetrieben werden kann, um die Kupplung 39 auszurücken. Ein weiterer Aspekt besteht darin, dass die Hydraulikzylinderbaugruppe als hydraulischer Kupplungssimulator verwendet werden kann, um während des Betätigens des Kupplungspedals 30 eine auf das Kupplungspedal 30 wirkende Stützkraft zu erzeugen.

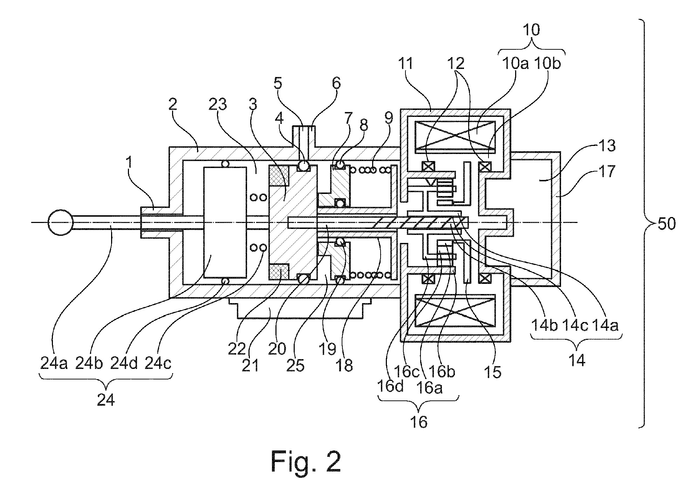

Fig. 2 zeigt einen Detailaufbau eines hydraulischen Hilfsaktuators dieser Erfindung. Genauer handelt es sich bei dem Zylindergehäusekörper 2 um das äußerste Teil der Hydraulikzylinderbaugruppe des hydraulischen Hilfsaktuators 50, weist er eine Längsachse 20 auf und sind der dritte Kolben 24b, der erste Kolben 3 und der zweite Kolben 7 der Reihe nach im Zylindergehäusekörper 2 angeordnet und können sich im Zylindergehäusekörper 2 entlang der Längsachse 20 hin- und hergehend bewegen. Der dritte Dichtungsring 24d befindet sich am äußeren Umfang des dritten Kolbens 24b und bewirkt dadurch ein Abdichten des dritten Kolbens 24b relativ zur Innenwand des Zylindergehäusekörpers 2. Der erste Dichtungsring 4 befindet sich am äußeren Umfang des ersten Kolbens 3 und bewirkt dadurch ein Abdichten des ersten Kolbens 3 relativ zur Innenwand des Zylindergehäusekörpers 2. Der zweite Dichtungsring 8 befindet sich am äußeren Umfang des zweiten Kolbens 7 und bewirkt dadurch ein Abdichten des zweiten Kolbens 7 relativ zur Innenwand des Zylindergehäusekörpers 2. Der vierte Dichtungsring 19 befindet sich am inneren Umfang des zweiten Kolbens 7 und bewirkt dadurch ein Abdichten des zweiten Kolbens 7 relativ zur Außenwand eines Stützrings 18.

Der Zylindergehäusekörper 2 weist an der Zylinderwand den Verbinder 6 auf. Der Verbinder 6 ist durch die Leitung 35 mit dem Geberzylinder 31 der Pedalbaugruppe verbunden, wodurch der Hohlraum des Zylindergehäusekörpers 2 mit dem Hohlraum des Geberzylinders 31 in Fluidverbindung steht, wie Fig. 1 zeigt. Eine Endstelle des Zylindergehäusekörpers 2 in axialer Richtung ist mit dem Elektromotorgehäuse 11 verbunden, die andere Endstelle weist eine Öffnung 1 auf, und die mit dem dritten Kolben 24b verbundene Schubstange 24a kann sich durch die Öffnung 1 bewegen. Die Schubstange 24a, der dritte Kolben 24b, die zweite Vorspannfeder 24c und der dritte Dichtungsring 24d bilden die Kolbenbaugruppe 24.

Der erste Kolben 3 wird von der Kugelgewindespindel 14 angetrieben, um im Zylindergehäusekörper 2 eine hin- und hergehende Bewegung auszuführen. Der dritte Kolben 24b ist fest mit dem ersten Kolben 3 verbunden. Dadurch wird zwischen dem ersten Kolben 3 und dem dritten Kolben 24b eine erste Hydraulikkammer 23 gebildet. Der Stützring 18 ist relativ zum ersten Kolben 3 befestigt. Vorzugsweise ist der Stützring 18 an der dem dritten Kolben 24b entgegengesetzten Seite des ersten Kolbens 3 mit dem ersten Kolben 3 verbunden, oder ist mit dem ersten Kolben 3 integriert gebildet, das heißt, ist ein Teil des ersten Kolbens 3. Die Längsachse des Stützrings 18 stimmt vorzugsweise mit der Längsachse 20 des Zylindergehäusekörpers 2 überein. Der Stützring 18 kann die Last aufnehmen, die von dem Druck in einer zweiten Hydraulikkammer 25 erzeugt wird, die zwischen dem ersten Kolben 3 und dem zweiten Kolben 7 gebildet wird, und von dem zweiten Kolben 7 und der ersten Vorspannfeder 9 übertragen wird. Der Stützring 18 stellt den Führungsweg des zweiten Kolbens 7 bereit und kann deshalb außerdem als Führungsrohr des zweiten Kolbens 7 verwendet werden.

Der zweite Kolben 7 stützt sich an dem Teil des Stützrings 18 mit relativ kleinem Durchmesser ab, wobei dieser Teil mit relativ kleinem Durchmesser fest mit dem ersten Kolben 3 verbunden ist oder mit dem ersten Kolben 3 integriert gebildet wird. Der zweite Kolben 7 kann sich an dem Teil des Stützrings 18 mit relativ kleinem Durchmesser bewegen. Ein Ende der ersten Vorspannfeder 9 ist an dem Teil des Stützrings 18 mit relativ großem Durchmesser befestigt, wobei dieser Teil mit relativ großem Durchmesser vom ersten Kolben 3 entfernt ist. Der zweite Kolben 7 ist mit dem anderen Ende der ersten Vorspannfeder 9 verbunden und wird dadurch von der ersten Vorspannfeder 9 gestützt. Der zweite Kolben 7 stellt einen Stützsockel der ersten Vorspannfeder 9 bereit. Der zweite Dichtungsring 8 dichtet den zweiten Kolben 7 ab, wodurch zwischen dem ersten Kolben 3 und dem zweiten Kolben 7 die zweite Hydraulikkammer 25 gebildet wird.

Ein Magnet 22 ist an dem ersten Kolben 3 angeordnet, um dem Sensor 21 die Hubinformationen des ersten Kolbens 3 bereitzustellen. Der Sensor 21 ist am Zylindergehäusekörper 2 angeordnet und ist vorzugsweise an der äußeren Oberfläche der Wand des Zylindergehäusekörpers 2 angeordnet. Der Sensor 21 kann der Leistungselektronik- und Steuereinheit 13 oder anderen Fahrzeugsteuereinheiten genaue Hubinformationen bereitstellen, wodurch die reale Position des ersten Kolbens 3 ermittelt werden kann.

Beim Elektromotor 10 kann es sich um einen beliebigen Typ handeln. Zum Beispiel weist der Elektromotor 10 einen Außenstator 10a und einen Innenrotor 10b sowie ein den Außenstator 10a und den Innenrotor 10b aufnehmendes Elektromotorgehäuse 11 auf. Der Dichtungsring 12 ist zwischen dem Innenrotor 10b und dem Elektromotorgehäuse 11 angeordnet, wodurch der Außenstator 10a durch den Dichtungsring 12 relativ zum Elektromotorgehäuse 11 abgedichtet wird. Der Innenrotor 10b ist fest mit dem Rotorträger 15 verbunden. Der Elektromotor 10 kann durch die Kugelgewindespindel 14 die Drehbewegung des Elektromotors in eine Linearbewegung der Kugelgewindespindel 14 umwandeln, wodurch der erste Kolben 3 bewegt wird.

Das Untersetzungsgetriebe 16 kann zwischen dem Elektromotor 10 und der Kugelgewindespindel 14 angeschlossen sein. Der Elektromotor 10 kann das Untersetzungsgetriebe 16 antreiben, um das Antriebsdrehmoment zu vergrößern. Bei dem Untersetzungsgetriebe 16 kann es sich um einen beliebigen Typ handeln, zum Beispiel um ein Planetengetriebe. Dieses Planetengetriebe umfasst das Sonnenrad 16a, den Zahnkranz 16b, das Planetenrad 16c und den Planetenträger 16d. Das Sonnenrad 16a ist mit dem Rotorträger 15 verbunden und wird vorzugsweise mit dem Rotorträger 15 integriert gebildet. Der Zahnkranz 16b wird an dem Teil des Elektromotorgehäuses 11 gebildet, an dem der Dichtungsring 12 montiert ist. Der Planetenträger 16d stützt sich an der Kugelgewindespindel 14 ab. Das Untersetzungsgetriebe 16 ist optional. Wenn der Elektromotor 10 über eine ausreichende Betätigungskraft verfügt, kann auf das Untersetzungsgetriebe 16 verzichtet werden.

Die Kugelgewindespindel 14 umfasst eine Mutter 14a, Kugeln 14b und eine Schnecke 14c. Die Kugeln 14b befinden sich zwischen der Mutter 14a und der Schnecke 14c. Die Mutter 14a ist mit dem Planetenträger 16d fest verbunden oder integriert gebildet, wodurch sich der Planetenträger 16d durch die Kugeln 14b an der Schnecke 14c abstützt. Die Schnecke 14c geht durch den Stützring 18 hindurch und ist fest mit dem ersten Kolben 3 verbunden, wodurch die lineare Bewegung auf den ersten Kolben 3 übertragen werden kann.

Die Leistungselektronik- und Steuereinheit 13 ist in einem Steuerkasten 17 angeordnet. Die Leistungselektronik- und Steuereinheit 13 ist optional gemäß dem Bedarf, für den sie verwendet wird. In der Regel ist die Leistungselektronik- und Steuereinheit 13 im hydraulischen Hilfsaktuator 50 integriert. Zum Beispiel kann die Leistungselektronik- und Steuereinheit 13 in einfacher Weise am Zylindergehäusekörper 2 montiert sein. Die Leistungselektronik- und Steuereinheit 13 ist mit einer Batterie 41 und einem Schalter 42 verbunden. Die Batterie 41 stellt für die Leistungselektronik- und Steuereinheit 13 den Strom bereit, und der Schalter 42 schaltet gemäß dem Bedarf des Kunden die Leistungselektronik- und Steuereinheit 13 ein oder aus, um die automatische Kupplungsbetätigungsfunktion ein- / auszuschalten.

Aufgrund der oben genannten konkreten Struktur weist der hydraulische Hilfsaktuator dieser Erfindung drei Betätigungsmodi auf, nämlich den manuellen Kupplungsbetätigungsmodus, den vollautomatischen Kupplungsbetätigungsmodus und den halbautomatischen Kupplungsbetätigungsmodus. Nachfolgend werden diese drei Betätigungsmodi detailliert beschrieben.

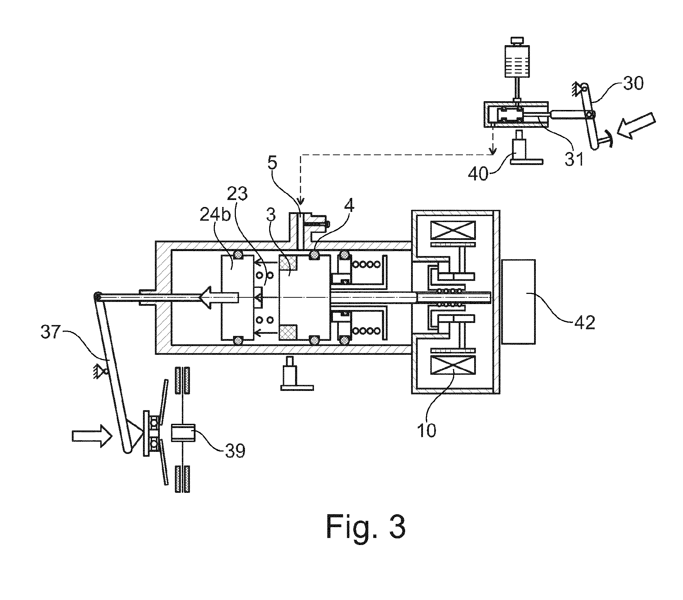

Fig. 3 zeigt einen manuellen Kupplungsbetätigungsmodus eines hydraulischen Hilfsaktuators dieser Erfindung. Im manuellen Kupplungsbetätigungsmodus bewegt sich das Kupplungspedal, während sich der Elektromotor nicht dreht. Durch ein Treten des Fahrers auf das Kupplungspedal wird die Kupplung betätigt.

Genauer befindet sich der Schalter 42 zur Realisierung dieses manuellen Betätigungsmodus im Zustand AUS. Der Elektromotor 10 hält den ersten Kolben 3 in einer rückwärtsgerichteten Position, das heißt in der ersten Position, wobei in dieser rückwärtsgerichteten Position sich der erste Dichtungsring 4 an der Rückseite der Öffnung 5 befindet, das heißt an der dem dritten Kolben 24b entgegengesetzten Seite der Öffnung 5, wie Fig. 3 zeigt. In diesem manuellen Betätigungsmodus ist die erste Hydraulikkammer 23 direkt mit dem Geberzylinder 31 der Pedalbaugruppe verbunden. Dies bedeutet, dass die Kupplung 39 gemäß dem herkömmlichen Hydraulikmodus durch das Kupplungspedal 30 geschlossen oder ausgerückt werden kann. Wenn das Kupplungspedal 30 vollständig nach unten getreten ist, wird der dritte Kolben 24b durch den Flüssigkeitsdruck in der ersten Hydraulikkammer 23 angetrieben, um die Vorspannkraft der zweiten Vorspannfeder 24c zu überwinden, und nach vorn, das heißt weg vom ersten Kolben 3, bewegt, um die Schaltgabel 37 der Kupplung anzuschieben. Dadurch wird die Kupplung 39 vollständig ausgerückt. Dies wird durch den Fuß des Fahrers realisiert.

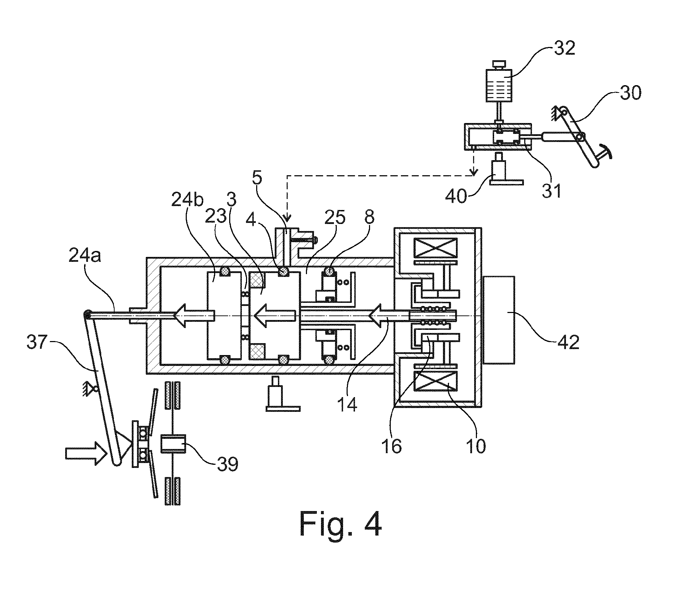

Fig. 4 zeigt einen vollautomatischen Kupplungsbetätigungsmodus eines hydraulischen Hilfsaktuators dieser Erfindung. Im vollautomatischen Betätigungsmodus bewegt sich das Kupplungspedal nicht, während sich der Elektromotor dreht. Die Kupplung wird vom Elektromotor betätigt.

Genauer startet der Elektromotor 10, wenn sich der Schalter 42 im Zustand AN befindet, und bewegt den ersten Kolben 3 in eine Zwischenposition, das heißt in die zweite Position, wobei in dieser Zwischenposition der erste Dichtungsring 4 sich in der Mitte der Öffnung 5 befindet. In diesem vollautomatischen Betätigungsmodus haben die erste Hydraulikkammer 23 und die zweite Hydraulikkammer 25 eine Verbindung zum Geberzylinder 31. Deshalb kann der Flüssigkeitsverlust in diesen zwei Hydraulikkammern vom Flüssigkeitsspeicher 32 kompensiert werden.

Anschließend kann gemäß dem Kommando des Fahrers die Kupplung 39 direkt durch den Elektromotor 10 betätigt werden. Da der Elektromotor 10 den ersten Kolben 3 zum Bewegen nach vorn veranlassen wird, passiert dadurch der erste Dichtungsring 4 die Öffnung 5. Die erste Hydraulikkammer 23 wird vom Geberzylinder 31 getrennt, während die zweite Hydraulikkammer 25 die Verbindung zum Geberzylinder 31 beibehält. Die Schubkraft, die vom Elektromotor 10, vom Untersetzungsgetriebe 16 und von der Kugelgewindespindel 14 herrührt, wirkt am ersten Kolben 3, wirkt anschließend über den dritten Kolben 24b an der Schubstange 24a und lastet schließlich auf der Schaltgabel 37 der Kupplung, wodurch ein Ausrücken der Kupplung 39 bewirkt wird.

Im oben genannten Prozess behält die zweite Hydraulikkammer 25 die Fluidverbindung mit dem Geberzylinder 31 bei und ist von der ersten Hydraulikkammer 23 getrennt. Dadurch wird in der zweiten Hydraulikkammer 25 keinerlei Druck erzeugt, weshalb am Kupplungspedal 30 keinerlei Bewegung auftreten wird. Hier muss der Abstand zwischen dem ersten Dichtungsring 4 und dem zweiten Dichtungsring 8 ausreichend groß sein, und genauer ist dieser Abstand größer als der im Ausrückvorgang der Kupplung vom ersten Kolbens 3 benötigte Bewegungshub.

Wenn der Elektromotor 10 den ersten Kolben 3 veranlasst, sich bis zur Zwischenposition zurückzubewegen, schließt die Kupplung 39 wieder.

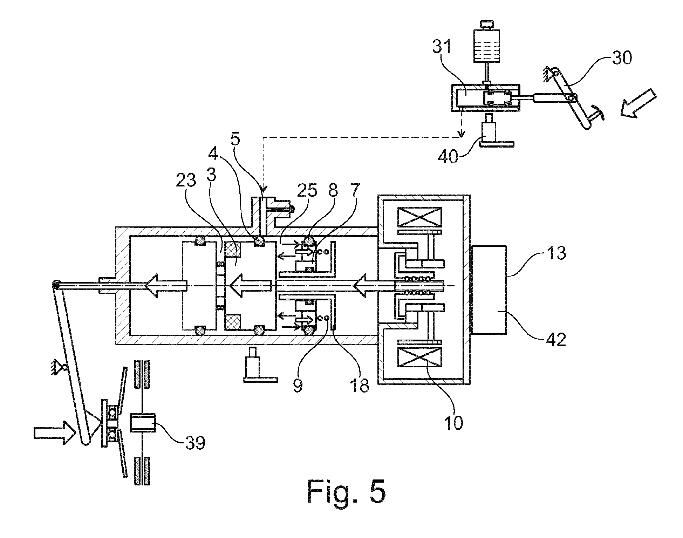

Fig. 5 zeigt einen halbautomatischen Kupplungsbetätigungsmodus eines hydraulischen Hilfsaktuators dieser Erfindung. Im halbautomatischen Betätigungsmodus wird das Kupplungspedal als Simulator bewegt, und auch der Elektromotor dreht sich. Das Kupplungspedal wird durch den Fuß des Fahrers betätigt und stellt dem Elektromotor ein Eingangssteuersignal bereit. Die Kupplung wird tatsächlich vom Elektromotor betätigt.

Genauer wird, wenn sich der Schalter 42 im Zustand AN befindet und gleichzeitig der Fahrer mit dem Fuß das Kupplungspedal 30 niedertritt, dadurch dieser halbautomatische Betätigungsmodus aktiviert. Der Elektromotor 10 hält den ersten Kolben 3 in einer vorwärtsgerichteten Position, das heißt in der dritten Position, wobei in dieser vorwärtsgerichteten Position sich der erste Dichtungsring 4 an der Vorderseite der Öffnung 5 befindet, das heißt an der dem zweiten Kolben 7 entgegengesetzten Seite der Öffnung 5, wie Fig. 5 zeigt. Die aus dem Geberzylinder 31 gedrückte Flüssigkeit fließt in die zweite Hydraulikkammer 25, um den zweiten Kolben 7 anzutreiben, sich an dem Stützring 18 nach hinten, das heißt vom ersten Kolben 3 wegführend, zu bewegen.

Die erste Vorspannfeder 9 wird zusammengedrückt und erzeugt eine Stützkraft, die der Bewegung des zweiten Kolbens 7 entgegenwirkt. Diese Stützkraft wird durch die

Drucklänge der ersten Vorspannfeder 9 erhöht und schließlich durch den Fuß des Fahrers im Kupplungspedal 30 wahrgenommen. Diese Stützkraft ist komfortabler im Vergleich zur Stützkraft, die durch Membranfedern in herkömmlichen Kupplungen erzeugt wird.

Gleichzeitig erfasst der Hubsensor 40 im Geberzylinder 31 die Positionsinformationen des Kolbens im Geberzylinder 31 oder die Positionsinformationen des Kupplungspedals 30 und stellt diese Positionsinformationen anschließend der Leistungselektronik- und Steuereinheit 13 bereit, die für den Elektromotor 10 verwendet wird, um den ersten Kolben 3 anzuschieben, wodurch eine Bewegung des ersten Kolbens 3 bewirkt wird. Nun werden der zweite Kolben 7 und die erste Vorspannfeder 9 tatsächlich als ein Kolbensimulator verwendet, um ein Eingangssignal der Kupplungsbetätigungssteuerung zu erzeugen, und der Hubsensor 40 stellt dieses Eingangssignal dem Elektromotor 10 bereit, um die Kupplung 39 zu betätigen.

Dadurch schaltet der Schalter 42 durch Umschalten des AN/ AUS-Zustandes zwischen verschiedenen Arbeitsmodi um. Der Hubsensor 40 stellt zwei Funktionen bereit. Eine Funktion besteht darin, den AN/ AUS-Zustand bereitzustellen, um den halbautomatischen Betätigungsmodus zu aktivieren, während die andere Funktion darin besteht, die Hubinformationen des Kolbens im Geberzylinder 31 oder die Hubinformationen des Kupplungspedals 30 als Eingangssignale dem Elektromotor 10 zum Betätigen der Kupplung 39 bereitzustellen.

Zusammenfassend stellt diese Erfindung einen hydraulischen Hilfsaktuator bereit, wobei der hydraulische Hilfsaktuator an einer Seite mit einer Pedalbaugruppe eines Fahrzeugs verbunden ist, an der anderen Seite mit einer Kupplungsbaugruppe eines Fahrzeugs verbunden ist und dazu dient zu bewirken, dass die Kupplung in der Kupplungsbaugruppe ausrückt, und der hydraulische Hilfsaktuator umfasst: einen Elektromotor, wobei der Elektromotor eine Drehbewegung erzeugt; eine Kugelgewindespindel, wobei die Kugelgewindespindel mit dem Elektromotor verbunden ist, um die Drehbewegung des Elektromotors in eine Linearbewegung umzuwandeln; eine Hydraulikzylinderbaugruppe, wobei die Hydraulikzylinderbaugruppe mit der Kugelgewindespindel verbunden ist, um von der Kugelgewindespindel angetrieben zu werden; eine Steuereinheit für das Steuern des Betriebs des Elektromotors; dadurch gekennzeichnet, dass die Hydraulikzylinderbaugruppe umfasst: einen Zylindergehäusekörper; der Reihe nach im Zylindergehäusekörper angeordnet einen zweiten Kolben, einen ersten Kolben und einen dritten Kolben, wobei der erste Kolben einen ersten Dichtungsring aufweist, der zweite Kolben einen zweiten Dichtungsring aufweist, der dritte Kolben einen dritten Dichtungsring aufweist und der dritte Kolben mit der Kupplungsbaugruppe verbunden ist; eine erste Vorspannfeder, wobei die erste Vorspannfeder den zweiten Kolben relativ zum ersten Kolben vorspannt; eine zweite Vorspannfeder, wobei die zweite Vorspannfeder den dritten Kolben relativ zum ersten Kolben vorspannt; wobei im Zylindergehäusekörper ein Loch angeordnet ist, das Loch eine Fluidverbindung der Hydraulikzylinderbaugruppe mit der Pedalbaugruppe bewirkt, das Loch in axialer Richtung des Zylindergehäusekörpers sich zwischen dem zweiten Dichtungsring des zweiten Kolbens und dem dritten Dichtungsring des dritten Kolbens befindet und der erste Kolben sich durch das Loch bewegen kann.

Weiterhin stellt diese Erfindung ein Fahrzeug bereit, wobei das Fahrzeug eine Kupplung, ein Handschaltgetriebe und weitere Teile aufweist, die Kupplung zwischen der Kraftquelle des Fahrzeugs und dem Handschaltgetriebe angeschlossen ist, und wobei das Fahrzeug außerdem einen oben genannten hydraulischen Hilfsaktuator aufweist, um die Kupplung zu betätigen.

Dadurch werden im Vergleich zum Stand der Technik durch diese Erfindung folgende Vorteile realisiert:
1. Es wird bewirkt, dass die Anwendung einer elektrischen Kupplungsbetätigung auf ein Handschaltgetriebe möglich wird, ohne dass das herkömmliche hydraulische Kupplungsausrücksystem verändert werden muss. Herkömmliche hydraulische Kupplungsausrücksysteme haben in Europa, China und weiteren Gebieten einen riesigen Markt. Deshalb kann diese Erfindung einen enormen ökonomischen Nutzen erzeugen.
2. Es wird eine elektrische automatische Kupplungsbetätigung bereitgestellt, wobei es nicht erforderlich ist, das Kupplungspedal zu bewegen, das heißt, es wird ein vollautomatischer Kupplungsbetätigungsmodus bereitgestellt. Eine elektrische Unterstützung des Stop-and-Go-Modus oder die Funktion des direkten automatisierten mechanischen Schaltens können in sehr einfacher Weise realisiert werden.
3. Es wird eine elektrische Kupplungsbetätigung auf der Grundlage des Bewegungsverhaltens des Kupplungspedals bereitgestellt, das heißt, es wird ein halbautomatischer Kupplungsbetätigungsmodus bereitgestellt. Durch einen Kupplungssimulator wird die Pedalkraft der Kupplung verringert und ein optimiertes Betätigungsverhalten bereitgestellt. Dies alles erhöht den Komfort während des Ausrückens der Kupplung.
4. Es wird ein Modus für den Antrieb von Fahrzeugen in der herkömmlichen Weise bereitgestellt, das heißt, es wird ein Modus des Betätigens der Kupplung durch eine Person bereitgestellt, bei dem durch ein Niederdrücken des Kupplungspedals die Kupplung ausrückt. Dieser Modus des Betätigens der Kupplung durch eine Person kann als Reserveprogramm für den schlimmsten Fall des Versagens des Elektromotors dienen. Er kann natürlich auch als eine Option für einen Fahrer dienen, der ein manuelles Schalten des Getriebes bevorzugt.

Vorstehend wurden mit Bezug auf die Zeichnungen konkrete Ausführungsbeispiele dieser Erfindung detailliert beschrieben. Es ist zu erwarten, dass ohne Verlassen des Geistes und des Umfangs dieser Erfindung, die von den beigefügten Ansprüchen definiert werden, an dieser Erfindung verschiedenartige Umgestaltungen und Modifikationen vorgenommen werden können.

### Bezugszeichenliste

- 1.: Öffnung
- 2.: Zylindergehäusekörper
- 3.: erster Kolben
- 4.: erster Dichtungsring
- 5.: Öffnung, Loch
- 6.: Verbinder
- 7.: zweiter Kolben
- 8.: zweiter Dichtungsring
- 9.: erste Vorspannfeder
- 10.: Elektromotor
- 10a.: Außenstator
- 10b.: Innenrotor
- 11.: Elektromotorgehäuse
- 12.: Dichtungsring
- 13.: Steuereinheit
- 14.: Kugelgewindespindel
- 14a.: Mutter
- 14b.: Kugeln
- 14c.: Schnecke
- 15.: Rotorträger
- 16.: Untersetzungsgetriebe
- 16a.: Untersetzungsgetriebe
- 16b.: Zahnkranz
- 16c.: Planetenrade
- 16d.: Planetenträger
- 17.: Steuerkasten
- 18.: Stützring
- 19.: vierter Dichtungsring
- 20.: Längenachse
- 21.: Sensor
- 22.: Magnet
- 23.: erste Hydraulikkammer
- 24.: Kolbenbaugruppe
- 24a.: Schubstange
- 24b.: dritter Kolben
- 24c.: zweite Vorspannfeder
- 24d.: dritter Dichtungsring
- 25.: zweite Hydraulikkammer
- 30.: Kupplungspedal
- 31.: Geberzylinder
- 32.: Flüssigkeitsspeicher
- 33.: Führungsrohr
- 35.: Leitung
- 37.: Schaltgabel
- 38.: Ausrücklager
- 39.: Kupplung
- 40.: Hubsensor
- 41.: Batterie
- 42.: Schalter
- 50.: hydraulischer Hilfsaktuator

## Patentansprüche

1. Hydraulischer Hilfsaktuator (50), wobei der hydraulische Hilfsaktuator (50) an einer Seite mit einer Pedalbaugruppe eines Fahrzeugs und an der anderen Seite mit einer Kupplungsbaugruppe eines Fahrzeugs verbunden ist zum Schließen oder Ausrücken der Kupplung (39) in der Kupplungsbaugruppe und der hydraulische Hilfsaktuator (50) umfasst:
einen Elektromotor (10), wobei der Elektromotor (10) eine Drehbewegung erzeugt;
eine Kugelgewindespindel (14), wobei die Kugelgewindespindel (14) mit dem Elektromotor (10) verbunden ist, um die Drehbewegung des Elektromotors (10) in eine Linearbewegung umzuwandeln;
eine Hydraulikzylinderbaugruppe, wobei die Hydraulikzylinderbaugruppe an einem Ende mit der Kugelgewindespindel (14) verbunden ist, um von der Kugelgewindespindel (14) angetrieben zu werden, und am anderen Ende mit der Kupplungsbaugruppe verbunden ist,
eine Steuereinheit (13) für ein Steuern des Betriebs des Elektromotors (10);
**dadurch gekennzeichnet, dass** die Hydraulikzylinderbaugruppe umfasst:
einen Zylindergehäusekörper (2);
der Reihe nach im Zylindergehäusekörper (2) angeordnet einen zweiten Kolben (7), einen ersten Kolben (3) und einen dritten Kolben (24b), wobei der erste Kolben (3) einen ersten Dichtungsring (4) an seinem äußeren Umfang aufweist, der zweite Kolben (7) einen zweiten Dichtungsring (8) an seinem äußeren Umfang und einen vierten Dichtungsring (19) an seinem inneren Umfang aufweist, der dritte Kolben (24b) einen dritten Dichtungsring (24d) an seinem äußeren Umfang aufweist und der dritte Kolben (24b) mit der Kupplungsbaugruppe verbunden ist;
eine erste Vorspannfeder (9), wobei die erste Vorspannfeder (9) den zweiten Kolben (7) relativ zum ersten Kolben (3) vorspannt;
eine zweite Vorspannfeder (24c), wobei die zweite Vorspannfeder (24c) den dritten Kolben (24b) relativ zum ersten Kolben (3) vorspannt;
wobei am Zylindergehäusekörper (2) eine Öffnung (5) angeordnet ist, und die Öffnung (5) eine Fluidverbindung der Hydraulikzylinderbaugruppe mit der Pedalbaugruppe bewirkt, und sich in axialer Richtung des Zylindergehäusekörpers (2) zwischen dem zweiten Dichtungsring (8) des zweiten Kolbens (7) und dem dritten Dichtungsring (24d) des dritten Kolbens (24b) befindet und der erste Kolben (3) sich durch die Öffnung (5) bewegen kann.

2. Hydraulischer Hilfsaktuator (50) nach Anspruch 1, wobei die Hydraulikzylinderbaugruppe einen Stützring (18) umfasst, der Stützring (18) relativ zum ersten Kolben (3) befestigt ist und der zweite Kolben (7) sich an dem Stützring (18) bewegen kann.

3. Hydraulischer Hilfsaktuator (50) nach Anspruch 1 oder 2, wobei der Stützring (18) einen Teil mit relativ kleinem Durchmesser und einen Teil mit relativ großem Durchmesser umfasst, der Teil mit relativ kleinem Durchmesser mit dem ersten Kolben (3) fest verbunden ist und der zweite Kolben (7) sich an dem Teil mit relativ kleinem Durchmesser bewegen kann, der Teil mit dem relativ großen Durchmesser vom ersten Kolben (3) entfernt ist und die erste Vorspannfeder (9) zwischen dem Teil mit relativ großem Durchmesser und dem zweiten Kolben (7) angeordnet ist.

4. Hydraulischer Hilfsaktuator (50) nach Anspruch 1 oder 2, wobei die Hydraulikzylinderbaugruppe außerdem ein Untersetzungsgetriebe (16) umfasst, wobei das Untersetzungsgetriebe (16) zwischen dem Elektromotor (10) und der Kugelgewindespindel (14) angeordnet ist.

5. Hydraulischer Hilfsaktuator (50) nach Anspruch 4, wobei es sich bei dem Untersetzungsgetriebe (16) um ein Planetengetriebe handelt, wobei das Sonnenrad (16a) des Planetengetriebes mit dem Rotorträger (15) des Rotors (10b) des Elektromotors (10) integriert gebildet wird.

6. Hydraulischer Hilfsaktuator (50) nach Anspruch 5, wobei ein Zahnkranz (16b) des Planetengetriebes fest mit dem Elektromotorgehäusekörper (11) des Elektromotors (10) verbunden ist.

7. Hydraulischer Hilfsaktuator (50) nach Anspruch 5 oder 6, wobei ein Planetenträger (16d) des Planetengetriebes mit der Mutter (14a) der Kugelgewindespindel (14) fest verbunden ist.

8. Hydraulischer Hilfsaktuator (50) nach Anspruch 1 oder 2, wobei in axialer Richtung des Zylindergehäusekörpers (2) der Abstand zwischen dem ersten Dichtungsring (4) und dem zweiten Dichtungsring (8) größer als der Bewegungshub des ersten Kolbens (3) im Ausrückvorgang der Kupplung (39) ist.

9. Hydraulischer Hilfsaktuator (50) nach Anspruch 1 oder 2, wobei an der Pedalbaugruppe ein Pedal (30), ein Geberzylinder (31) sowie ein Hubsensor (40) angeordnet sind, das Pedal (30) mit dem Kolben im Geberzylinder (31) verbunden ist, der Hubsensor (40) den Hub des Kolbens im Geberzylinder (31) oder des Pedals (30) ermittelt und die ermittelten Informationen der Steuereinheit (13) bereitstellt.

10. Fahrzeug, wobei das Fahrzeug ein Handschaltgetriebe und eine Kupplung um fasst, die Kupplung zwischen der Kraftquelle des Fahrzeugs und dem Handschaltgetriebe angeschlossen ist, **dadurch gekennzeichnet, dass** das Fahrzeug außerdem einen hydraulischen Hilfsaktuator (50) nach einem der vorstehenden Ansprüche 1 bis 9 umfasst.
